# EUROPÄISCHE PATENTANMELDUNG

(11) **EP 4 617 543 A1**
(43) Veröffentlichungstag der Anmeldung: **17.09.2025**
(21) Anmeldenummer: 24162665.4
(22) Anmeldetag: 11.03.2024
(51) Int. Cl.: F16L 37/084, F16L 37/10, F16L 37/23, F16L 37/42, F16L 37/44

(54) **ANSCHLUSSKUPPLUNG ZUM AUSBRINGEN EINES FLUIDS IN EINEN TANK**

(71) Anmelder: Oasis Engineering (2003) Ltd, Tauranga 3110 (NZ)
(72) Erfinder: Schulz-Hildebrandt, Lasse, 22525 Hamburg (DE); Thompson, Kane, Edgecumbe 3120 (NZ)
(74) Vertreter: Glawe, Delfs, Moll

(57) **Zusammenfassung**

Anschlusskupplung zum Ausbringen eines Fluids in einen Tank, umfassend ein Gehäuse, einen ersten mit einer Fluidzuleitung verbindbaren Fluidanschluss, einen zweiten mit einem Anschlussstutzen des Tanks verbindbaren Fluidanschluss, einen durch das Gehäuse führenden Kanal zur Durchleitung des Fluids vom ersten zum zweiten Fluidanschluss, ein im Kanal angeordnetes Hauptventil, eine Kupplungseinrichtung zum Herstellen und Lösen einer Verbindung zwischen der Anschlusskupplung und dem Anschlussstutzen, und eine Betätigungsvorrichtung zur Betätigung der Kupplungseinrichtung und des Hauptventils. Erfindungsgemäß weist die Betätigungsvorrichtung ein Griffelement auf, das einen Außenabschnitt des Gehäuses zumindest teilweise umgibt und zusammen mit dem Außenabschnitt des Gehäuses von einer Hand eines Benutzers umgreifbar ausgestaltet ist. Das Griffelement ist relativ zu dem Außenabschnitt des Gehäuses um eine Drehachse drehbar und mit der Kupplungseinrichtung und dem Hauptventil derart gekoppelt, dass eine Drehung des Griffelements eine Betätigung der Kupplungseinrichtung und des Hauptventils bewirkt. Die Ausgestaltung des Griffelements ermöglicht einen benutzerfreundlichen, intuitiven und sicheren Betankungsvorgang.

## Beschreibung

Gegenstand der vorliegenden Erfindung ist eine Anschlusskupplung zum Ausbringen eines Fluids in einen Tank.

Anschlusskupplungen kommen insbesondere bei der sogenannten Druckbetankung zum Einsatz, bei der zwischen einem Fluidreservoir und dem Tank ein geschlossenes System hergestellt wird, indem die Anschlusskupplung im Wesentlichen fluiddicht mit dem Anschlussstutzen verbunden wird. Das Fluid kann dann mit relativem Überdruck in den Tank eingebracht werden, ohne dass es am Übergang zwischen Anschlusskupplung und Anschlussstutzen zu einem Austreten des Fluids in die Umwelt kommen kann. Anschlusskupplungen dieser Art werden beispielsweise zum Ausbringen von verdichtetem Erdgas (CNG) oder verdichtetem Wasserstoff (H2) verwendet. Weiterhin können die Anschlusskupplungen sowohl für Flüssigkeiten als auch für verflüssigte Gase beispielsweise zum Ausbringen von Flüssiggas (LPG), verflüssigtem Erdgas (LNG) oder verflüssigtem Wasserstoff (LH2) verwendet werden. Insbesondere für die Betankung von Kraftfahrzeugen ist es wünschenswert, dass die Anschlusskupplungen für den Benutzer leicht und sicher zu handhaben sind.

Aus dem Dokument WO 03/074923 ist eine Anschlusskupplung bekannt, die mit ihrem vorderen Ende auf einen Anschlussstutzen aufgesetzt wird, wobei zur Verriegelung mit dem Anschlussstutzen sowie zur Betätigung eines Hauptventils ein am Gehäuse drehbar gelagerter Hebel durch Rotation um eine Hochachse betätigt werden muss. Die Herstellung der Verbindung erfordert bei dieser Art Anschlusskupplung eine gewisse Übung, da durch die Betätigung des Hebels ein Kippmoment erzeugt wird, welches senkrecht zu einer Achse verläuft, entlang der die Anschlusskupplung auf den Anschlussstutzen aufgesetzt wird.

Ausgehend davon ist es die Aufgabe der vorliegenden Erfindung, eine Anschlusskupplung der oben genannten Art bereitzustellen, welches eine für den Benutzer einfachere und zuverlässigere Bedienung ermöglicht. Gelöst wie diese Aufgabe mit den Merkmalen der unabhängigen Ansprüche. Vorteilhafte Ausführungsformen sind in den Unteransprüchen angegeben.

Demnach betriff die Erfindung eine Anschlusskupplung zum Ausbringen eines Fluids in einen Tank. Die Anschlusskupplung umfasst ein Gehäuse, einen ersten mit einer Fluidzuleitung verbindbaren Fluidanschluss, einen zweiten mit einem Anschlussstutzen des Tanks verbindbaren Fluidanschluss, einen durch das Gehäuse führenden Kanal zur Durchleitung des Fluids vom ersten zum zweiten Fluidanschluss, ein im Kanal angeordnetes Hauptventil, eine Kupplungseinrichtung zum Herstellen und Lösen einer Verbindung zwischen der Anschlusskupplung und dem Anschlussstutzen und eine Betätigungsvorrichtung zur Betätigung der Kupplungseinrichtung und des Hauptventils. Erfindungsgemäß weist die Betätigungsvorrichtung ein Griffelement auf, das einen Außenabschnitt des Gehäuses zumindest teilweise umgibt. Das Griffelement ist zusammen mit dem Außenabschnitt des Gehäuses von einer Hand eines Benutzers umgreifbar ausgestaltet. Weiterhin ist das Griffelement relativ zu dem Außenabschnitt um eine Drehachse drehbar und mit der Kupplungseinrichtung und dem Hauptventil derart gekoppelt, dass eine Drehung des Griffelements eine Betätigung der Kupplungseinrichtung und des Hauptventils bewirkt.

Zunächst werden einige im Rahmen der vorliegenden Offenbarung verwendete Begriffe erläutert. Die Anschlusskupplung kann mit einem Anschlussstutzen eines Tanks verbunden werden. Dazu wird der zweite Fluidanschluss auf den Anschlussstutzen aufgesetzt. Es wird dabei vorzugsweise eine fluiddichte Verbindung zwischen dem Anschlussstutzen und dem zweiten Fluidanschluss hergestellt. Die Anschlusskupplung kann insbesondere zur Druckbetankung des Tanks ausgebildet sein. Bei den auszubringenden Fluiden kann es sich beispielsweise um LPG, LNG, CNG und/oder H2 handeln. Die Kupplungseinrichtung dient dazu, die Verbindung herzustellen, insbesondere kann die Kupplungseinrichtung zur Verriegelung des zweiten Fluidanschlusses am Anschlussstutzen dienen, um nach der Herstellung der Verbindung ein unbeabsichtigtes Lösen zu verhindern. Eine Betätigung der Kupplungseinrichtung kann insbesondere eine Verriegelung der Kupplungseinrichtung oder ein Lösen der Kupplungseinrichtung umfassen. Eine Betätigung des Hauptventils kann insbesondere ein Öffnen des Hauptventils oder ein Schließen des Hauptventils umfassen.

Die Erfindung schlägt somit vor, ein Griffelement, das einen Außenabschnitt des Gehäuses umgibt und von der Hand eines Benutzers zusammen mit dem Außenabschnitt sicher umgriffen werden kann, gleichzeitig zur Betätigung der Kupplungseinrichtung und des Hauptventils zu verwenden, indem das Griffelement relativ zum Gehäuse gedreht wird. Das Griffelement kann während der Betätigung zusammen mit dem Außenabschnitt sicher in der Hand gehalten werden, ohne dass es - wie im oben genannten Stand der Technik - mit der anderen Hand erforderlich wäre, einen Hebel zu betätigen, durch den ein Kippmoment auf das Gehäuse ausgeübt wird. Dadurch kann die Anschlusskupplung während des Aufsetzens sowie während einer nachfolgenden Betätigung der Kupplungseinrichtung sicherer und bequemer gehalten werden. Es hat sich zudem gezeigt, dass die Betätigung der Kupplungseinrichtung auch für ungeübte Benutzer auf intuitive Weise möglich ist.

Die Drehachse ist in einer Ausführungsform entlang einer Aufsetzrichtung, entlang der der zweite Fluidanschluss auf den Anschlussstutzen aufsetzbar ist, ausgerichtet. Die Aufsetzrichtung entspricht üblicherweise einer Axialrichtung des Fluidanschlusses bzw. des Anschlussstutzens. Insbesondere kann die Drehachse eine Winkelabweichung zur Aufsetzrichtung aufweisen, die kleiner ist als 30°, vorzugsweise kleiner als 15°. Insbesondere kann die Drehachse im Wesentlichen parallel zur Aufsetzrichtung sein. Dem Benutzer ist es dadurch möglich, die Anschlusskupplung im Wesentlichen entlang der Drehachse gegen den Anschlussstutzen zu drücken und währenddessen das Griffelement durch eine Drehung um die Drehachse zu betätigen.

In einer Ausführungsform umfasst die Betätigungsvorrichtung wenigstens eine drehfest mit dem Griffelement verbundenen Nutkurve und wenigstens einen Betätigungszapfen. Die Nutkurve kann derart mit dem Betätigungszapfen zusammenwirken, dass der Betätigungszapfen bei einer Drehung des Griffelements entlang der Drehachse relativ zum Griffelement verschoben wird, um wenigstens eines von der Kupplungseinrichtung und dem Hauptventil zu betätigen. Der Begriff Nutkurve bezeichnet eine am Griffelement gebildete Nut, Vertiefung, oder Aussparung, in die der Betätigungszapfen eingreifen kann, wobei der Betätigungszapfen bei einer Drehung des Griffelements relativ zum Griffelement bewegt wird und dabei entlang der Nutkurve läuft. Wenn die Nutkurve wenigstens abschnittsweise entlang der Drehachse verläuft, kann der Betätigungszapfen durch die Drehung des Griffelements entlang der Drehachse verschoben werden. Es hat sich gezeigt, dass eine durch das Zusammenwirken von Nutkurve und Betätigungszapfen erreichte Verschiebung des Betätigungszapfens entlang der Drehachse auf konstruktiv einfache und zuverlässige Weise zur Betätigung des Hauptventils und der Kupplungseinrichtung ausgenutzt werden kann. Die Nutkurve kann insbesondere an einer Innenseite des Griffelements gebildet sein. Die Innenseite weist in Richtung der Drehachse des Griffelements. Das Griffelement kann einstückig ausgebildet sein, wobei die Nutkurve im einstückigen Griffelement gebildet sein kann. Eine Nutkurve kann auch in einem oder mehreren separaten Bauteilen gebildet sein, das oder die drehfest mit dem Griffelement verbunden sein können. Ein solches separates Bauteil wird nachfolgend auch als Nutkurvenring bezeichnet.

In einer Ausführungsform umfasst die wenigstens eine Nutkurve eine erste Nutkurve und eine zweite Nutkurve. Der wenigstens eine Betätigungszapfen kann zudem einen ersten Betätigungszapfen und einen zweiten Betätigungszapfen umfassen. Der erste Betätigungszapfen kann mit der ersten Nutkurve zur Betätigung der Kupplungseinrichtung zusammenwirken, wobei der zweite Betätigungszapfen mit der zweiten Nutkurve zur Betätigung des Hauptventils zusammenwirken kann. Wenn die Kupplungseinrichtung und das Hauptventil durch separate Betätigungszapfen bzw. Nutkurven betätigt werden, ist es möglich, das Hauptventil sowie die Kupplungseinrichtung unabhängig voneinander und insbesondere zeitversetzt zueinander zu betätigen. Dazu können die Nutkurven derart eingerichtet werden, dass die jeweiligen Betätigungszapfen bezogen auf eine Drehung des Griffelements in voneinander verschiedenen Winkelabschnitten entlang der Drehachse verschoben werden.

In einer Ausführungsform ist der erste Betätigungszapfen zur Übertragung einer Bewegung auf eine Schiebehülse ausgebildet, wobei die Schiebehülse bei einer Bewegung in eine erste Richtung zum Herstellen einer Verriegelung des zweiten Fluidanschlusses mit dem Anschlussstutzen und bei einer Bewegung in eine der ersten Richtung entgegengesetzte zweite Richtung zum Lösen der Verriegelung ausgebildet ist. Die Verriegelung kann auf grundsätzlich bekannte Weise mit Hilfe von in radialer Richtung bewegbaren Verriegelungselementen erfolgen (siehe etwa EP 3 767 153 B1), wobei die radiale Richtung eine Richtung ist die senkrecht zu einer Axialrichtung des Anschlussstutzens bzw. des zweiten Fluidanschlusses ist.

Ein Verriegelungselement ist in einer Ausführungsform dazu ausgebildet, die Schiebehülse an einer Bewegung entlang der ersten Richtung zu hindern, wobei das Verriegelungselement eine Bewegung der Schiebehülse in die erste Richtung freigibt, wenn der zweite Fluidanschluss auf den Anschlussstutzen aufgesetzt wird. Dies hat den Vorteil, dass eine Betätigung des Griffelements blockiert wird, da die Schiebehülse, und somit auch der erste Betätigungszapfen nicht entlang der Drehachse verschiebbar ist, solange der zweite Fluidanschluss nicht auf den Anschlussstutzen aufgesetzt ist. So kann auch ein unerwünschtes Öffnen des Hauptventils verhindert werden, da durch die Blockade des Griffelements auch der zweite Betätigungszapfen nicht zur Betätigung des Hauptventils verschoben wird.

In einer Ausführungsform ist die Schiebehülse durch ein Rückstellelement in die erste Richtung vorgespannt. Die Schiebehülse kann in diesem Fall automatisch in die erste Richtung bewegt werden, sobald der zweite Fluidanschluss auf den Anschlussstutzen aufgesetzt und die Bewegung der Schiebehülse dadurch freigegeben wird. Es kann vorgesehen sein, dass die Schiebehülse und der Betätigungszapfen axial miteinander gekoppelt sind, so dass eine Bewegung der Schiebehülse in die erste Richtung auf den Betätigungszapfen übertragen wird. Wenn der Betätigungszapfen beim Aufsetzen der Anschlusskupplung auf den Anschlussstutzen zusammen mit der Schiebehülse in die erste Richtung bewegt wird, kann dadurch ein Drehmoment auf das Griffelement und somit eine automatische Drehung des Griffelements bewirkt werden. Für den Benutzer ist es dann beim Aufsetzen nicht mehr erforderlich, aktiv das Griffelement durch Aufwenden eines Drehmoments zu drehen. Vielmehr erfolgt die Drehung beim oder nach dem Aufsetzen des zweiten Fluidanschlusses automatisch, wodurch der Komfort für den Benutzer erhöht wird. Umfasst der Benutzer das Griffelement und hält es beim Aufsetzen der Anschlusskupplung auf den Anschlussstutzen fest, spürt er das Drehmoment, das auf das Griffelement wirkt. Dies veranlasst den Benutzer automatisch dazu, die erforderliche Drehung des Griffelementes auszuführen bzw. zuzulassen und lehrt ihn gleichzeitig, wie das Griffelement im weiteren Verlauf betätigt werden muss.

In einer Ausführungsform ist das Hauptventil durch ein Rückstellelement in eine Schließstellung vorgespannt. Weiterhin kann der zweite Betätigungszapfen zur Betätigung des Hauptventils entgegen einer Rückstellkraft des Rückstellelements verschiebbar sein. Wenn der zweite Betätigungszapfen entgegen der Kraft des Rückstellelements verschiebbar ist, kann der Benutzer, der das Griffelement in seiner Hand hält, durch Aufbringen eines entsprechenden Drehmoments das Hauptventil auf kontrollierte Weise öffnen.

Die erste Nutkurve und die zweite Nutkurve sind in einer Ausführungsform derart ausgestaltet, dass die Betätigung der Kupplungseinrichtung und die Betätigung des Hauptventils in voneinander verschiedenen Drehwinkelbereichen des Griffelements erfolgen. Insbesondere kann das Griffelement eine Anfangsdrehposition, in der die Verbindung zwischen der Anschlusskupplung und dem Anschlussstutzen gelöst und das Hauptventil geschlossen ist, aufweisen. Weiterhin kann das Griffelement eine Enddrehposition aufweisen, in der die Verbindung zwischen der Anschlusskupplung und dem Anschlussstutzen hergestellt und das Hauptventil geöffnet ist. In einem ersten Drehwinkelbereich, der sich ausgehend von der Anfangsdrehposition bis zu einem Winkel zwischen 0° und 90° erstrecken kann, kann vorgesehen sein, dass die Kupplungseinrichtung betätigt wird, um eine Verriegelung mit dem Anschlussstutzen herzustellen. Der erste Drehwinkelbereich kann sich insbesondere bis zu einem Winkel zwischen 4° und 45°, weiter insbesondere zwischen 8° und 14° erstrecken. Es kann ein Zwischenwinkelbereich vorgesehen sein, der sich an den ersten Drehwinkelbereich anschließt. Der Zwischenwinkelbereich kann sich ausgehend vom Ende des Drehwinkelbereichs über einen zusätzlichen Winkel erstrecken, der zwischen 1° und 90°, insbesondere zwischen 5° und 45°, weiter insbesondere zwischen 10° und 24° liegt. Es kann vorgesehen sein, dass im Zwischenwinkelbereich keine Betätigung der Kupplungseinrichtung und keine Betätigung des Hauptventils stattfindet. Weiterhin kann ein zweiter Drehwinkelbereich vorgesehen sein, der sich ausgehend vom Ende des ersten Drehwinkelbereichs oder - sofern dieser vorhanden ist - ausgehend vom Ende des Zwischenwinkelbereichs über einen zusätzlichen Winkel erstreckt, der zwischen 1° und 180°, insbesondere zwischen 5° und 45°, weiter insbesondere zwischen 10° und 32° liegt. Es kann vorgesehen sein, dass im zweiten Drehwinkelbereich das Hauptventil betätigt wird, um eine Öffnung des Hauptventils zu bewirken. Beispielsweise kann sich der erste Drehwinkelbereich ausgehend von der Anfangsdrehposition über 14° erstrecken. Der Zwischenwinkelbereich kann sich anschließend daran über weitere 24° erstrecken (also betrachtet von der Anfangsdrehposition bis 38°). Der zweite Drehwinkelbereich kann sich anschließend daran über weitere 32° erstrecken (also betrachtet von der Anfangsdrehposition bis 70°).

Die Anschlusskupplung kann weiterhin einen Entlüftungskanal mit einem Entlüftungsventil zur Entlüftung eines Abschnitts des Kanals umfassen. Eine der Nutkurven kann derart mit einem der Betätigungszapfen zusammenwirken, dass der Betätigungszapfen bei einer Drehung des Griffelements entlang der Drehachse relativ zum Griffelement verschoben wird, um das Entlüftungsventil zu betätigen. Es kann sich bei der Nutkurve um die zweite Nutkurve und bei dem Betätigungszapfen um den zweiten Betätigungszapfen handeln. Möglich ist auch, dass zur Betätigung des Entlüftungsventils eine separate Nutkurve und ein separater Betätigungszapfen vorgesehen werden. Die vorstehend beschriebene Ausgestaltung ermöglicht auf einfache und zuverlässige Weise den Abbau eines Überdrucks, der beispielsweise nach dem Aufsetzen der Anschlusskupplung auf den Anschlussstutzen innerhalb des Kanals entstehen kann, wenn ein im Tank vorhandener Überdruck auf den Kanal übergeht oder der sich beispielsweise nach einem Betankungsvorgang nach dem Schließen des Hauptventils innerhalb des Kanals aufbauen kann. Ein sicherer Druckabbau ist wichtig, um zu verhindern, dass sich der Überdruck stoßartig beim Aufsetzen oder Absetzen der Anschlussstutzen entspannt und eine unkontrollierte mechanischen Beschleunigung der Anschlusskupplung bewirkt.

Das Griffelement kann drehbar sein von der Anfangsdrehposition in die Enddrehposition, in der die Verbindung zwischen der Anschlusskupplung und dem Anschlussstutzen hergestellt und das Hauptventil geöffnet ist. Weiterhin kann die Nutkurve und der Betätigungszapfen derart ausgestaltet sein, dass das Griffelement während einer Drehung von der Anfangsdrehposition in die Enddrehposition einen Entlüftungswinkelbereich durchschreitet, in dem das Entlüftungsventil geöffnet und das Hauptventil verschlossen ist. Das Entlüftungsventil kann insbesondere bei einer Drehung des Griffelements in Öffnungsrichtung vor dem Öffnen des Hauptventils geschlossen werden. Weiterhin kann das Entlüftungsventil bei einer Drehung des Griffelements in Schließrichtung nach dem Schließen des Hauptventils geöffnet werden. Der Entlüftungswinkelbereich kann innerhalb des vorstehend genannten Zwischenwinkelbereichs liegen oder sich über den Zwischenwinkelbereich erstrecken.

Das Griffelement kann ein Sichtfenster aufweisen, wobei der Außenabschnitt des Gehäuses ein erstes Informationselement umfasst, das durch das Sichtfenster sichtbar wird, wenn sich das Griffelement in einer ersten Drehposition befindet, wobei der Außenabschnitt des Gehäuses ein zweites Informationselement umfasst, das durch das Sichtfenster sichtbar wird, wenn sich das Griffelement in einer zweiten Drehposition befindet. Bei der ersten Drehposition kann es sich insbesondere um eine Position handeln, in der das Hauptventil geschlossen ist. Dem ersten Informationselement kann in diesem Fall die Information zugeordnet werden, dass das Hauptventil geschlossen ist und keine Fluidabgabe erfolgt. Bei der zweiten Drehposition kann es sich um eine Position handeln, in der das Hauptventil geöffnet ist. Dem zweiten Informationselement kann in diesem Fall die Information zugeordnet werden, dass das Hauptventil offen ist und eine Fluidabgabe erfolgt. Die Informationselemente können beispielsweise eine Farbe, einen Buchstaben und/oder eine Zahl anzeigen. Es können noch weitere Informationselemente vorhanden sein, die jeweils weiteren Drehpositionen zugeordnet sind.

In einer Ausführungsform umfasst das Hauptventil einen Ventilkörper, der durch ein Rückstellelement in eine Schließstellung gedrängt wird und durch die Betätigungsvorrichtung entgegen einer Rückstellkraft des Rückstellelements in eine Öffnungsstellung bewegbar ist. Die Anschlusskupplung kann ein Dämpfungselement aufweisen, das mit dem Ventilkörper derart zusammenwirkt, dass eine Bewegung des Ventilkörpers in die Schließstellung gedämpft wird. Durch das Dämpfungselement kann die Kraft, mit der der Ventilkörper während des Schließvorgangs gegen den Ventilsitz gedrückt wird, verringert werden. Es hat sich gezeigt, dass dadurch ein deutlich sanfteres Schließverhalten erreicht werden kann, wodurch ein Materialverschleiß am Ventilkörper sowie am Dichtsitz verringert werden kann. Darüber hinaus wird auch eine vom Rückstellelement auf die Betätigungsvorrichtung ausgeübte Schließkraft während des Schließvorgangs auf sanftere Weise an die Betätigungsvorrichtung weitergegeben, was die Benutzerfreundlichkeit erhöht.

Die vorstehend erläuterte Idee, ein Dämpfungselement vorzusehen, das eine Bewegung des Ventilkörpers in die Schließstellung dämpft, weist gegebenenfalls eigenständigen erfinderischen Charakter auf, ohne dass es erforderlich ist, dass die Betätigungsvorrichtung das vorstehend beschriebene Griffelement aufweist, das einen Außenabschnitt des Gehäuses zumindest teilweise umgibt und zusammen mit dem Außenabschnitt des Gehäuses von einer Hand eines Benutzers umgreifbar ausgestaltet ist, wobei das Griffelement relativ zu dem Außenabschnitt des Gehäuses um eine Drehachse drehbar und mit der Kupplungseinrichtung und dem Hauptventil derart gekoppelt ist, dass eine Drehung des Griffelements eine Betätigung der Kupplungseinrichtung und des Hauptventils bewirkt.

In einer Ausführungsform wird das Dämpfungselement während einer Bewegung des Ventilkörpers in die Schließstellung entgegen einer Rückstellkraft ausgelenkt. Das Dämpfungselement kann ein Federelement aufweisen oder aus einem elastischen oder flexiblen Material ausgebildet sein.

Das Hauptventil kann weiterhin eine mit dem Ventilkörper in Verbindung stehende Ventilstange aufweisen, wobei das Dämpfungselement während der Bewegung des Ventilkörpers in die Schließstellung zwischen der Ventilstange und einem Abschnitt des Gehäuses komprimiert wird.

Die Erfindung wird nachfolgend anhand beispielhafter Ausführungsformen unter Bezugnahme auf die beigefügten Zeichnungen erläutert. Es zeigen:
- Figur 1:: eine dreidimensionale Seitenansicht einer erfindungsgemäßen Anschlusskupplung vor dem Herstellen einer Verbindung mit einem Anschlussstutzen;
- Figur 2:: eine Seitenansicht der Anschlusskupplung der Figur 1 nach dem Aufsetzen der Anschlusskupplung auf den Anschlussstutzen;
- Figur 3:: eine seitliche Schnittansicht der Anschlusskupplung der Figur 1 vor dem Herstellen einer Verbindung mit dem Anschlussstutzen;
- Figur 4:: eine seitliche Schnittansicht der Anschlusskupplung der Figur 2 nach dem Herstellen einer Verbindung mit dem Anschlussstutzen;
- Figur 5:: die Ansicht der Figur 1, wobei das Griffelement nicht gezeigt ist;
- Figur 6:: Teilelemente der Anschlusskupplung der Figur 1 in der in Figur 5 gezeigten Stellung;
- Figur 7:: die Ansicht der Figur 2, wobei das Griffelement nicht gezeigt ist;
- Figur 8:: Teilelemente der Anschlusskupplung der Figur 1 in der in Figur 7 gezeigten Stellung;
- Figur 9:: die in den Figuren 6 und 8 gezeigten Teilelemente nach dem Öffnen des Hauptventils.
- Figur 10:: eine seitliche Schnittansicht der Anschlusskupplung der Figur 1 nach dem Öffnen des Hauptventils;
- Figur 11:: eine seitliche Schnittansicht der Anschlusskupplung der Figur 1 nach dem Öffnen des Hauptventils entlang einer Schnittebene, die senkrecht steht zur Schnittebene der Figur 10;

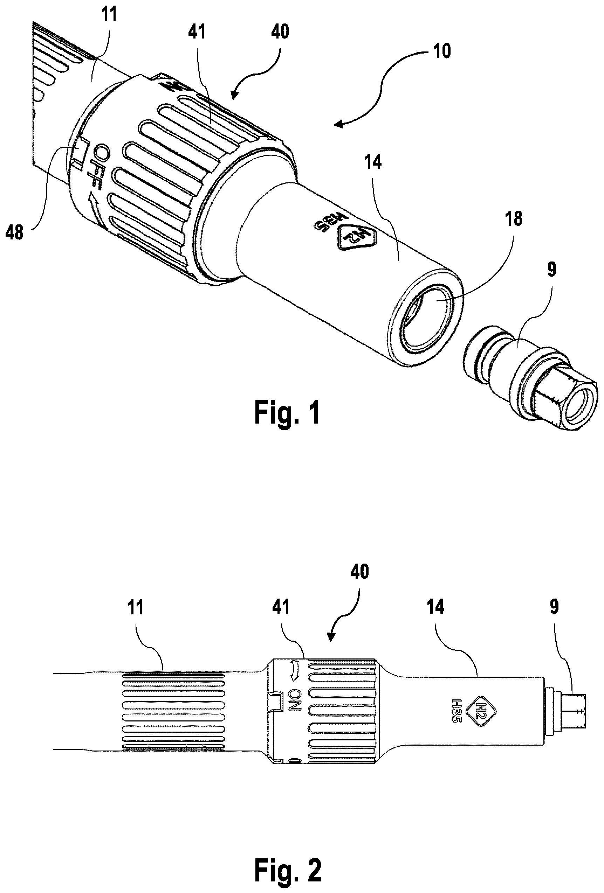

Figur 1 zeigt eine erfindungsgemäße Anschlusskupplung in einer dreidimensionalen Seitenansicht vor dem Herstellen einer Verbindung mit einem Anschlussstutzen 9. Die Anschlusskupplung ist zur Ausbringung von komprimiertem Wasserstoff ausgebildet. Die Anschlusskupplung umfasst ein Gehäuse 10 mit einem hinteren Gehäuseteil 11 und einem vorderen Gehäuseteil 14. Am hinteren Gehäuseteil 11 befindet sich ein in Figur 1 nicht erkennbarer erster Fluidanschluss zur Verbindung mit einer Fluidzuleitung. An einem Auslassende des vorderen Gehäuseteils 14 ist ein zweiter Fluidanschluss 18 ausgebildet. Das Gehäuse 10 der Anschlusskupplung erstreckt sich entlang einer Axialrichtung des zweiten Fluidanschlusses 18. Die Anschlusskupplung kann mit dem Anschlussstutzen 9 verbunden werden, indem der zweite Fluidanschluss 18 entlang seiner Axialrichtung auf den Anschlussstutzen 9 aufgesetzt wird.

Weiterhin umfasst die Anschlusskupplung eine Betätigungsvorrichtung 40 mit einem Griffelement 41. Das Griffelement 41 umgibt einen Außenabschnitt des Gehäuses 10 und ist relativ zum Gehäuse 10 drehbar ausgestaltet. Eine Drehachse des Griffelements 41 ist entlang der Axialrichtung des zweiten Fluidanschlusses 18 ausgerichtet. Ein Benutzer kann das Griffelement 41 sowie den bezogen auf das Griffelement 41 radial innen befindlichen Außenabschnitt des Gehäuses 10 mit einer Hand umgreifen und auf diese Weise einfach auf den Anschlussstutzen 9 aufstecken. Durch eine Drehung des Griffelements 41 kann der Benutzer anschließend eine Kupplungsvorrichtung, ein Hauptventil sowie ein Entlüftungsventil der Anschlusskupplung betätigen, was nachfolgend im Detail erläutert wird. Da eine Drehachse des Griffelements in der Richtung entspricht, entlang die Anschlusskupplung auf den Anschlussstutzen aufgesetzt wird, entstehen relativ zur Axialen Erstreckung des Anschlussstutzens 9 keine Kippmomente, wodurch die Bedienung erleichtert wird.

Das Griffelement 41 umfasst weiterhin ein Sichtfenster 48, unterhalb dem ein auf dem Außenabschnitt des Gehäuses 10 aufgebrachtes Informationselement sichtbar ist. In der in Figur 1 gezeigten Stellung zeigt das Informationselement an, dass sich das Hauptventil in einer Schließstellung befindet.

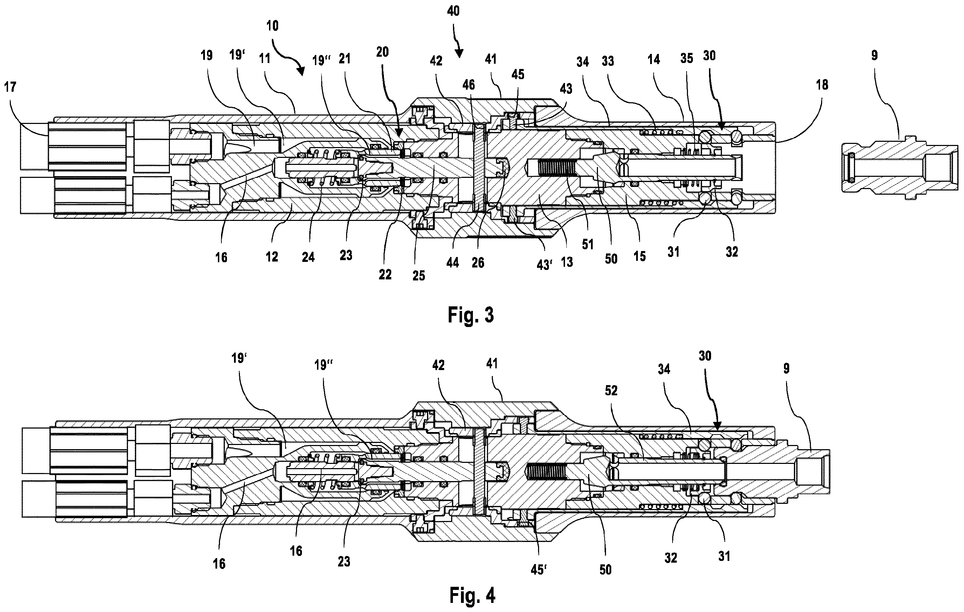

Figur 2 zeigt eine Seitenansicht der Anschlusskupplung der Figur 1 nach dem Aufsetzen der Anschlusskupplung auf den Anschlussstutzen 9. Während des Aufsetzens wurde ein vorderes Ende des Anschlussstutzens 9 in eine Aufnahme des Fluidanschlusses 18 eingeführt. Dieser Vorgang wird nachfolgend anhand der Figuren 3 und 4 genauer erläutert.

Figur 3 zeigt eine seitliche Schnittansicht der Anschlusskupplung der Figur 1 vor dem Herstellen einer Verbindung mit dem Anschlussstutzen 9. In dieser Ansicht ist erkennbar, dass das Gehäuse 10 weitere Gehäuseteile 12, 13 und 15 aufweist. Zudem ist der erste Fluidanschluss 17 zu sehen, der mit einer Fluidzuleitung verbunden werden kann. Der erste Fluidanschluss 17 geht in einen Kanal 19 über, der sich durch das Gehäuse 10 bzw. durch die Gehäuseteile 12, 13, 15 bis zum zweiten Fluidanschluss 18 erstreckt, um den komprimierten Wasserstoff durch ein nicht dargestelltes Rückschlagventil in einen mit dem Anschlussstutzen 9 verbundenen Tank abzugeben.

In dem Kanal 19 befindet sich ein Hauptventil 20 mit einem Ventilkörper 21 und einem Ventilsitz 22. In dem in Figur 3 gezeigten Zustand befindet sich das Hauptventil 20 in einer Schließstellung, in der der Ventilkörper 21 dichtend am Ventilsitz 22 anliegt. Der Ventilkörper 21 trennt in dieser Schließstellung den Kanal 19 in einen drucktragenden Teilkanal 19' und einen drucklosen Teilkanal 19". Der Ventilkörper 21 wird durch eine Schließfeder 24 in die Schließstellung gedrängt. Mit dem Ventilkörper 21 ist zudem eine Ventilstange 25 verbunden, an deren vorderem Ende ein Dämpfungselement 26 befestigt ist. Bei einer Bewegung des Ventilkörpers 21 in die Schließstellung kommt das Dämpfungselement 26, wie in Figur 3 gezeigt, mit einem Gehäuseteil 13 in Kontakt und wird durch die Kraft der Schließfeder komprimiert, wodurch der Ventilkörper 21 am Ende der Schließbewegung nicht abrupt gegen den Ventilsitz 22 stößt, sondern sanft am Ventilsitz 22 zum Liegen kommt.

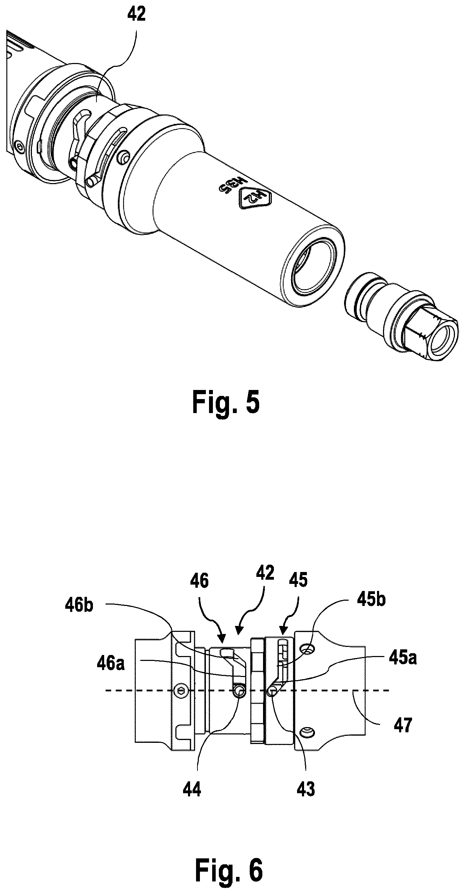

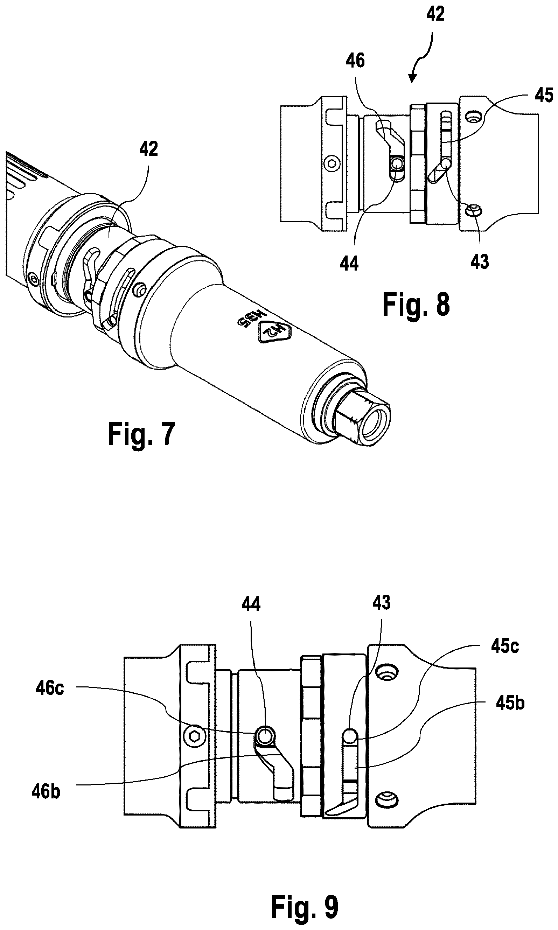

In der Ansicht der Figur 3 ist weiterhin erkennbar, dass die Betätigungsvorrichtung 40 zusätzlich zum Griffelement 41 einen drehfest mit dem Griffelement 41 verbundenen Nutkurvenring 42 umfasst. Der Nutkurvenring 42 weist eine erste Nutkurve 45 und eine zweite Nutkurve 46 auf, die in der Schnittansicht der Figur 3 als Öffnungen erkennbar sind. Ein erster Betätigungszapfen 43 greift in die erste Nutkurve 45 ein und ein zweiter Betätigungszapfen 44 greift in die zweite Nutkurve 46 ein. Der Verlauf der Nutkurven ist in den Figuren 6 und 8 erkennbar und wird nachfolgend noch genauer erläutert. Jede der Nutkurven 45, 46 weist auf einer bezüglich der Drehachse gegenüberliegenden Seite des Nutkurvenrings 42 eine korrespondierende Nutkurve auf, die bezüglich der Drehachse spiegelsymmetrisch ausgebildet ist. Der Betätigungszapfen 44 erstreckt sich durch das Innere des Gehäuses 10 und greift mit seinen Enden in die Nutkurve 46 und die gegenüberliegende korrespondierende Nutkurve ein. Der Betätigungszapfen 43 greift nur in die Nutkurve 45 ein, wobei bezogen auf die Drehachse gegenüberliegend ein korrespondierender Betätigungszapfen 43' vorhanden ist, der in die korrespondierende Nutkurve 45' eingreift. Bei einer Drehung des Griffelements werden die Betätigungszapfen 44, 43, 43' entlang der Drehachse verschoben, um das Hauptventil 20, ein Entlüftungsventil 23 und eine Kupplungseinrichtung 30 zu betätigen.

Die Kupplungseinrichtung 30 befindet sich an einem (bezogen auf den Fluidstrom) stromabwärtigen Ende des Gehäuses 10 und umfasst eine Schiebehülse 34, die durch ein Rückstellelement 33 stromabwärts gedrängt wird, vier kugelförmig ausgebildete Verriegelungselemente 31 und ein Sperrglied 32, das ebenfalls durch ein Rückstellelement in eine stromabwärtige Richtung vorgespannt ist. In dem in Figur 3 gezeigten Zustand befinden sich die Verriegelungselemente 31 in einer in dem Gehäuseteil 15 gebildeten Aussparung und greifen außerdem in eine Aussparung der Schiebehülse 34 ein, wobei zumindest einige der Verriegelungselemente 31 durch das Sperrglied 32 an einer radial nach innen gerichteten Bewegung gehindert werden. Die Verriegelungselemente 31 verhindern auf diese Weise eine stromabwärtige Bewegung der Schiebehülse 34.

Die Anschlusskupplung umfasst weiterhin ein Tellerventil 50, das durch ein Rückstellelement 51 in eine Schließstellung gedrängt wird. In dem in Figur 3 gezeigten Zustand befindet sich das Tellerventil 50 in der Schließstellung und liegt dichtend an einem Ventilsitz an. An seinem stromabwärtigen Ende weist das Tellerventil 50 einen Rohrfortsatz 52 auf, durch den das Medium bei geöffnetem Tellerventil 50 hindurchgeleitet wird.

Das Entlüftungsventil 23 dient dazu, einen im Teilkanal 19" herrschenden Überdruck über einen Entlüftungskanal 16 in einen Sammelbehälter abzuführen. Das Entlüftungsventil 23 ist in dem in Figur 3 gezeigten Zustand in einer Öffnungsstellung. Das Entlüftungsventil ist mit dem Hauptventil 20 gekoppelt und wird somit ebenfalls durch den Betätigungszapfen 44 betätigt.

Figur 4 zeigt eine seitliche Schnittansicht der Anschlusskupplung der Figur 1 nach dem Herstellen einer Verbindung mit dem Anschlussstutzen 9. Bei Aufsetzen des zweiten Fluidanschlusses 18 auf den Anschlussstutzen 9 greift das stromabwärtige Ende des Rohrfortsatzes 52 dichtend in eine Aufnahme des Anschlussstutzens 9 ein und kommt an einem in der Aufnahme gebildeten Anschlag zum Liegen. Bei einer weiteren Bewegung der Anschlusskupplung in Richtung Anschlussstutzen 9 wird der Rohrfortsatz 52 zusammen mit dem Speerglied 32 relativ zum Gehäuseteil 15 stromaufwärts bewegt. Dadurch wird einerseits das Tellerventil 50 aus seinem Dichtsitz gehoben und dadurch in eine Öffnungsstellung bewegt. Zudem ermöglicht die Verschiebung des Sperrglieds 32 den Verriegelungselementen 31, radial nach innen auszuweichen und so eine stromabwärts gerichtete Bewegung der Schiebehülse 34 zu ermöglichen. Da die Schiebehülse 34 durch das Rückstellelement 33 stromabwärts gedrängt wird, geschieht die Verschiebung der Schiebehülse 34 automatisch. Die Betätigungszapfen 43, 43', die mit der Schiebehülse 34 verbunden sind, werden dadurch ebenfalls stromaufwärts verschoben. Dabei laufen die Betätigungszapfen entlang der Nutkurve 45 (bzw. der korrespondierenden Nutkurve 45`), wodurch eine Drehung des Kurvenrings 42 sowie des damit drehfest verbundenen Griffelements 41 bewirkt wird.

In Figur 4 ist zu sehen, dass die Position des Betätigungszapfens 44 sich durch den Vorgang des Aufsetzens auf den Anschlussstutzen 9 nicht verändert hat. Das Hauptventil 20 befindet sich daher noch immer in einer Schließposition und das Entlüftungsventil 23 befindet sich noch immer in einer geöffneten Position.

Die Figuren 5 bis 8 dienen zur weiteren Illustration der in den Figuren 3 und 4 gezeigten Zustände. Figur 5 zeigt die Ansicht der Figur 1, wobei das Griffelement zur Veranschaulichung des Nutkurvenrings 42 weggelassen ist. Figur 6 zeigt den Nutkurvenring 42 mit den Nutkurven 45, 46 und den darin eingreifenden Betätigungszapfen 43, 44 in einer Seitenansicht. In den Figuren 5 und 6 ist der Zustand vor dem Aufsetzen der Anschlusskupplung auf den Anschlussstutzen 9 gezeigt. Es ist erkennbar, dass sich die Betätigungszapfen 43, 44 in diesem Zustand an einem Anfangsbereich der jeweiligen Nutkurve 45, 46 anliegen. Die Nutkurve 45 weist einen vom Anfangsbereich ausgehenden ersten Nutkurvenabschnitt 45a auf, der mit der Drehachse 47 einen 45°-Winkel einschließt. Ein sich an den Abschnitt 45a anschließender Kurvenabschnitt 45b schließt mit der Drehachse 47 einen 90°-Winkel ein. Die Nutkurve 46 umfasst einen sich ausgehend vom Anfangsbereich erstreckenden Nutkurvenabschnitt 46a, der in einem 90°-Winkel zur Drehachse 47 ausgerichtet ist und einen Nutkurvenabschnitt 46b, der in einem 45°-Winkel zur Drehachse 47 ausgerichtet ist.

Die Figuren 7 und 8 entsprechen den Figuren 5 und 6, wobei im Unterschied zu den Figuren 5 und 6 der Zustand nach dem Aufsetzen der Anschlusskupplung auf den Anschlussstutzen 9 gezeigt ist. Wie oben bereits erläutert, führt der Aufsetzvorgang dazu, dass die Schiebehülse 34 (aufgrund ihrer Vorspannung durch das Rückstellelement 33) den Betätigungszapfen 43 stromabwärts zieht. Aufgrund der Schrägstellung des Nutkurvenabschnitts 45a relativ zur Drehachse 47 in einem 45°-Winkel wird ein Drehmoment auf den Nutkurvenring 42 um die Drehachse 47 ausgeübt. Das Drehmoment kann so bemessen sein, dass ein Nutzer beim Aufsetzen der Anschlusskupplung bei der Drehung des Griffelements 41 zur Betätigung der Kupplungseinrichtung 30 unterstützt wird. Möglich ist auch, dass das Drehmoment so stark ist, dass die Drehung automatisch erfolgt. In beiden Fällen wird vorliegend davon gesprochen, dass durch die Drehung des Griffelements 41 (sowie des damit verbundenen Nutkurvenrings 42) die Kupplungseinrichtung 30 betätigt wird, um eine Verriegelung mit dem Anschlussstutzen 9 herzustellen.

Da der Nutkurvenabschnitt 46a in einem 90°-Winkel zur Drehachse 47 ausgerichtet ist, wird der Betätigungszapfen 44 durch die Drehung des Nutkurvenrings 42 nicht entlang der Drehachse bewegt. Beim Übergang von dem in Figur 6 gezeigten Zustand zu dem in Figur 8 gezeigten Zustand wird das Griffelement 41 ausgehend von einer Anfangsdrehposition um etwa 14° gedreht. Der Winkelbereich, der sich ausgehend von der Anfangsdrehposition bis zu dem Drehwinkel von etwa 14° erstreckt wird im Rahmen der vorliegenden Beschreibung auch als erster Drehwinkelbereich bezeichnet.

Um das Hauptventil ausgehend von der in den Figuren 7 und 8 illustrierten Stellung zu öffnen, übt der Benutzer ein weiteres Drehmoment auf das Griffelement 41 aus, um dieses zusammen mit dem Nutkurvenring 42 relativ zum Gehäuse der Anschlusskupplung um die Drehachse 47 weiter zu drehen. Dadurch laufen die Betätigungszapfen 43, 44 in der Figur 8 weiter relativ zur jeweiligen Nutkurve 45, 46 nach oben, bis die in Figur 9 gezeigte Stellung erreicht ist. Figur 9 zeigt die in den Figuren 6 und 8 gezeigten Teilelemente nach dem Öffnen des Hauptventils.

Beim Übergang von der in Figur 8 gezeigten Stellung in die in Figur 9 gezeigte Stellung läuft der Betätigungszapfen 43 entlang des senkrecht zur Drehachse ausgerichteten Nutkurvenabschnitts 45b. Der Betätigungszapfen 43 wird daher nicht relativ zum Nutkurvenring 42 entlang der Drehachse verschoben und es erfolgt entsprechend keine weitere Betätigung der Kupplungseinrichtung.

Der Betätigungszapfen 44 läuft zunächst entlang des senkrecht zur Drehachse ausgerichteten Abschnitts 46a, so dass während der Drehung des Griffelements 41 ein gewisser Zeitraum verstreicht, in dem das Entlüftungsventil 23 noch geöffnet ist, das Hauptventil 20 jedoch noch geschlossen verbleibt.

Erst bei Erreichen des Abschnitts 46b wird der Betätigungszapfen 44 relativ zum Nutkurvenring 42 verschoben, wodurch zunächst das Entlüftungsventil 23 geschlossen und anschließend das Hauptventil 20 geöffnet wird. Der Drehwinkelbereich, der sich ausgehend von der in Figur 8 gezeigten Stellung bis zu der Stellung erstreckt, an der der Betätigungszapfen 44 den Nutkurvenabschnitt 46b erreicht, wird vorliegend auch als Entlüftungswinkelbereich oder Zwischenwinkelbereich bezeichnet. Er erstreckt sich vorliegend über 24°. Ausgehend vom Ende des Zwischenwinkelbereichs bis zu der in Figur 9 illustrierten Enddrehposition wird das Griffelement über weitere 32° gedreht.

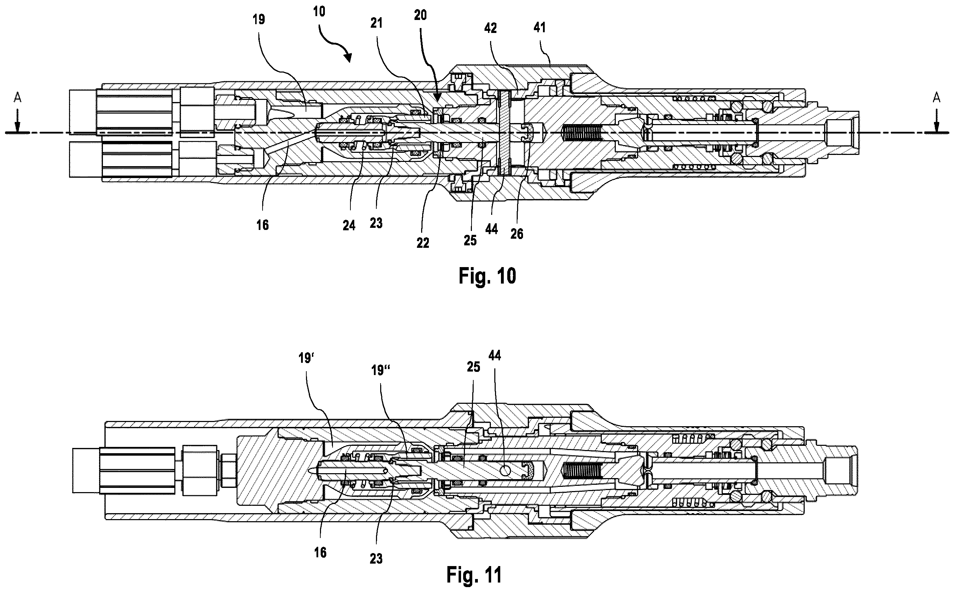

Figur 10 zeigt eine seitliche Schnittansicht der Anschlusskupplung der Figur 1 nach dem Öffnen des Hauptventils. Im Vergleich zu dem in Figur 4 gezeigten Zustand ist insbesondere erkennbar, dass der Betätigungszapfen 44 durch das oben beschriebene Zusammenwirken mit der Nutkurve 46 relativ zum Gehäuse der Anschlusskupplung nach links verschoben wurde. Der Betätigungszapfen 44 ist durch eine in der Ventilstange 25 vorhandene Durchgangsöffnung hindurchgeführt, sodass die Verschiebung des Betätigungszapfens 44 auf die Ventilstange 25 übertragen wird. Mit der Ventilstange 25 ist einerseits das Entlüftungsventil 23 gekoppelt, welches durch die Bewegung der Ventilstange 25 geschlossen wird. Darüber hinaus ist die Ventilstange 25 mit dem Ventilkörper 21 gekoppelt, der entgegen einer Rückstellkraft der Schließfeder 24 aus der in Figur 4 gezeigten Schließstellung heraus in die in Figur 10 gezeigte Öffnungsstellung bewegt wurde. Das Entlüftungsventil 23 und das Hauptventil 20 sind dabei derart aufeinander abgestimmt, dass durch die Bewegung der Ventilstange 25 zuerst das Entlüftungsventil 23 verschlossen und anschließend das Hauptventil 20 geöffnet wird.

Figur 11 zeigt eine seitliche Schnittansicht der Anschlusskupplung der Figur 1 nach dem Öffnen des Hauptventils entlang einer Schnittebene, die senkrecht steht zur Schnittebene der Figur 10. In der Ansicht der Figur 11 ist der Verlauf des Hauptkanals 19 mit den Teilkanälen 19` und 19" sowie des Entlüftungskanals 16 aus einer anderen Perspektive zu sehen. Zudem ist erkennbar, dass der Betätigungszapfen 44 durch ein Durchgangsloch in der Ventilstange 25 hindurchgeführt ist.

In dem in den Figuren 9 bis 11 gezeigten Zustand befindet sich das Griffelement 41 in einer vollständig geöffneten Stellung, in der das Hauptventil geöffnet ist, das Entlüftungsventil 23 geschlossen ist und Wasserstoff über den Anschlussstutzen 9 in den Tank eingebracht wird. Die Betätigungszapfen 43, 44 befinden sich in diesem Zustand jeweils in einem Endabschnitt 45c, 46c der jeweiligen Nutkurve 45, 46, welcher jeweils senkrecht zur Drehachse ausgerichtet ist. Somit kann in dieser Stellung von den jeweiligen Betätigungszapfen 43, 44 kein Drehmoment auf den Nutkurvenring 42 bzw. das Griffelement 41 übertragen werden. Das Griffelement 41 verbleibt somit in der vollständig geöffneten Stellung, solange der Benutzer das Griffelement nicht aktiv in Schließrichtung dreht.

In einer alternativen, vorliegend nicht illustrierten Ausführungsform wäre es auch möglich, dass der Endabschnitt 46c sich in einem Winkel zur Drehachse erstreckt, so dass ein Benutzer in der vollständig geöffneten Position eine gewisse Kraft zum "Offenhalten" des Hauptventils aufwenden muss oder dass ausgehend von der vollständig geöffneten Stellung ein gewisser Widerstand zum Einleiten des "Schließvorganges" überwunden werden muss. Beides lässt sich über einen geeigneten Winkel zwischen der Erstreckung des Endabschnitts 46c der Nutkurve 46 und der Drehachse 47 erreichen, der in der alternativen Ausführungsform entweder positiv oder negativ von dem in Figur 9 vorhandenen senkrechten Winkel abweichen kann. Eine entsprechende Anpassung der bei der Herstellung der Verbindung mit dem Anschlussstutzen 9 wirkenden Drehmomente kann durch eine entsprechende Anpassung der Nutkurve 45 erfolgen. Die beiden aufeinander abgestimmten Nutkurven ermöglichen somit eine gewünschte Variation eines auf das Griffelement wirkenden Drehmoments, um eine gewünschte Öffnungscharakteristik zu erzielen.

Das in Figur 1 gezeigte Sichtfenster 48 verschiebt sich bei der Bewegung des Griffelements 41 in die vollständig geöffnete Stellung relativ zu dem Außenabschnitt des Gehäuses und gibt ein zweites Informationselement frei, welches dem Benutzer anzeigt, dass ein Betankungsvorgang stattfindet.

Nach Abschluss des Betankungsvorgangs kann der Benutzer das Griffelement 41 in eine entgegengesetzte Richtung drehen, wobei die vorstehend beschriebenen Vorgänge dann in umgekehrter Reihenfolge ablaufen. Zunächst schließt das Hauptventil, wobei kurz danach das Entlüftungsventil 23 geöffnet wird. Durch das Öffnen des Entlüftungsventils 23 wird der Teilkanal 19" mit dem Entlüftungskanal 16 verbunden, wodurch innerhalb des Teilkanals 19" vorhandene unter Druck stehende Wasserstoffdämpfe abgeführt werden können. Erst nachdem der Betätigungszapfen 43 den senkrecht zur Drehachse 47 ausgerichteten Nutkurvenbereich 45b durchlaufen hat, wird die Kupplungseinrichtung 30 durch eine entsprechende Bewegung des Betätigungszapfens 43 betätigt, um eine Entriegelung zu bewirken.

## Patentansprüche

1. Anschlusskupplung zum Ausbringen eines Fluids in einen Tank, umfassend
ein Gehäuse (10),
einen ersten mit einer Fluidzuleitung verbindbaren Fluidanschluss (17),
einen zweiten mit einem Anschlussstutzen (9) des Tanks verbindbaren Fluidanschluss (18),
einen durch das Gehäuse (10) führenden Kanal (19) zur Durchleitung des Fluids vom ersten (17) zum zweiten Fluidanschluss (18),
ein im Kanal (19) angeordnetes Hauptventil (20),
eine Kupplungseinrichtung (30) zum Herstellen und Lösen einer Verbindung zwischen der Anschlusskupplung und dem Anschlussstutzen (9), und
eine Betätigungsvorrichtung (40) zur Betätigung der Kupplungseinrichtung (30) und des Hauptventils (20),
**dadurch gekennzeichnet, dass**
die Betätigungsvorrichtung (40) ein Griffelement (41) aufweist, das einen Außenabschnitt des Gehäuses (10) zumindest teilweise umgibt und zusammen mit dem Außenabschnitt des Gehäuses (10) von einer Hand eines Benutzers umgreifbar ausgestaltet ist,
wobei das Griffelement (41) relativ zu dem Außenabschnitt des Gehäuses (10) um eine Drehachse (47) drehbar und mit der Kupplungseinrichtung (30) und dem Hauptventil (20) derart gekoppelt ist, dass eine Drehung des Griffelements (41) eine Betätigung der Kupplungseinrichtung (30) und des Hauptventils (20) bewirkt.

2. Anschlusskupplung nach Anspruch 1, **dadurch gekennzeichnet, dass** die Anschlusskupplung eine Aufsetzrichtung aufweist, entlang der der zweite Fluidanschluss (18) auf den Anschlussstutzen (9) aufsetzbar ist, wobei die Drehachse eine Winkelabweichung zur Aufsetzrichtung aufweist, die kleiner ist als 30°, vorzugsweise kleiner als 15°, wobei die Drehachse (47) weiter vorzugsweise entlang der Aufsetzrichtung ausgerichtet ist.

3. Anschlusskupplung nach Anspruch 1 oder 2, **dadurch gekennzeichnet, dass** die Betätigungsvorrichtung (40) wenigstens eine drehfest mit dem Griffelement (41) verbundene Nutkurve (45, 46) und wenigstens einen Betätigungszapfen (43, 44) umfasst, wobei die Nutkurve (45, 46) derart mit dem Betätigungszapfen (43, 44) zusammenwirkt, dass der Betätigungszapfen (43, 44) bei einer Drehung des Griffelements (41) entlang der Drehachse relativ zum Griffelement (41) verschoben wird, um wenigstens eines von der Kupplungseinrichtung (30) und dem Hauptventil (20) zu betätigen.

4. Anschlusskupplung nach Anspruch 3, **dadurch gekennzeichnet, dass** die wenigstens eine Nutkurve (45, 46) eine erste Nutkurve (45) und eine zweite Nutkurve (46) umfasst, wobei der wenigstens eine Betätigungszapfen (43, 44) einen ersten Betätigungszapfen (43) und einen zweiten Betätigungszapfen (44) umfasst, wobei der erste Betätigungszapfen (43) mit der ersten Nutkurve (45) zur Betätigung der Kupplungseinrichtung (30) zusammenwirkt und wobei der zweite Betätigungszapfen (44) mit der zweiten Nutkurve (46) zur Betätigung des Hauptventils (20) zusammenwirkt.

5. Anschlusskupplung nach Anspruch 4, **dadurch gekennzeichnet, dass** der erste Betätigungszapfen (43) zur Übertragung einer Bewegung auf eine Schiebehülse (34) ausgebildet ist, wobei die Schiebehülse (34) bei einer Bewegung in eine erste Richtung zum Herstellen einer Verriegelung des zweiten Fluidanschlusses (18) mit dem Anschlussstutzen (9) und bei einer Bewegung in eine der ersten Richtung entgegengesetzte zweite Richtung zum Lösen der Verriegelung ausgebildet ist.

6. Anschlusskupplung nach Anspruch 5, **dadurch gekennzeichnet, dass** die Anschlusskupplung weiterhin ein Verriegelungselement (31) aufweist, das dazu ausgebildet ist, die Schiebehülse (34) an einer Bewegung entlang der ersten Richtung zu hindern, wobei das Verriegelungselement (31) eine Bewegung der Schiebehülse (34) in die erste Richtung freigibt, wenn der zweite Fluidanschluss (18) auf den Anschlussstutzen (9) aufgesetzt wird.

7. Anschlusskupplung nach einem der Ansprüche 5 oder 6, bei dem die Schiebehülse (34) durch ein Rückstellelement (33) in die erste Richtung vorgespannt ist.

8. Anschlusskupplung nach einem der Ansprüche 4 bis 7, bei dem das Hauptventil (20) durch ein Rückstellelement (24) in eine Schließstellung vorgespannt ist, wobei der zweite Betätigungszapfen (44) zur Betätigung des Hauptventils (20) entgegen einer Rückstellkraft des Rückstellelements (24) verschiebbar ist.

9. Anschlusskupplung nach einem der Ansprüche 4 bis 8, **dadurch gekennzeichnet, dass** die erste Nutkurve (45) und die zweite Nutkurve (46) derart mit dem ersten und dem zweiten Betätigungszapfen (43, 44) zusammenwirken, dass die Betätigung der Kupplungseinrichtung (30) und die Betätigung des Hauptventils (20) in voneinander verschiedenen Drehwinkelbereichen des Griffelements (41) erfolgen.

10. Anschlusskupplung nach einem der Ansprüche 4 bis 9, **dadurch gekennzeichnet, dass** die Anschlusskupplung weiterhin einen Entlüftungskanal (16) mit einem Entlüftungsventil (23) zur Entlüftung eines Abschnitts des Kanals (19) umfasst, wobei eine der Nutkurven (46) derart mit einem der Betätigungszapfen (44) zusammenwirkt, dass der Betätigungszapfen (44) bei einer Drehung des Griffelements (41) entlang der Drehachse relativ zum Griffelement (41) verschoben wird, um das Entlüftungsventil (23) zu betätigen.

11. Anschlusskupplung nach Anspruch 10, **dadurch gekennzeichnet, dass** das Griffelement (41) drehbar ist von einer Anfangsdrehposition, in der die Verbindung zwischen der Anschlusskupplung und dem Anschlussstutzen (9) gelöst und das Hauptventil (20) geschlossen ist, in eine Enddrehposition, in der die Verbindung zwischen der Anschlusskupplung und dem Anschlussstutzen (9) hergestellt und das Hauptventil (20) geöffnet ist, wobei die Nutkurve (46) und der Betätigungszapfen (44) derart ausgestaltet sind, dass das Griffelement (41) während einer Drehung des Griffelements von der Anfangsdrehposition in die Enddrehposition einen Entlüftungswinkelbereich durchschreitet, in dem das Entlüftungsventil (23) geöffnet und das Hauptventil verschlossen ist.

12. Anschlusskupplung nach Anspruch 11, **dadurch gekennzeichnet, dass** das Entlüftungsventil (23) bei einer Drehung des Griffelements (41) von der Anfangsdrehposition in die Enddrehposition vor dem Öffnen des Hauptventils (20) geschlossen wird, wobei das Entlüftungsventil (23) vorzugsweise bei einer Drehung des Griffelements (41) von der Enddrehposition in die Anfangsdrehposition nach dem Schließen des Hauptventils geöffnet wird.

13. Anschlusskupplung nach einem der Ansprüche 1 bis 12, **dadurch gekennzeichnet, dass** das Griffelement (41) ein Sichtfenster (48) aufweist, wobei der Außenabschnitt des Gehäuses (10) ein erstes Informationselement umfasst, das durch das Sichtfenster (48) sichtbar wird, wenn sich das Griffelement in einer ersten Drehposition befindet, wobei der Außenabschnitt des Gehäuses ein zweites Informationselement umfasst, das durch das Sichtfenster (48) sichtbar wird, wenn sich das Griffelement (41) in einer zweiten Drehposition befindet.

14. Anschlusskupplung nach einem der Ansprüche 1 bis 13, **dadurch gekennzeichnet, dass** das Hauptventil (20) einen Ventilkörper (21) umfasst, der durch ein Rückstellelement (24) in eine Schließstellung gedrängt wird und durch die Betätigungsvorrichtung (40) entgegen einer Rückstellkraft des Rückstellelements (24) in eine Öffnungsstellung bewegbar ist, wobei die Anschlusskupplung ein Dämpfungselement (26) aufweist, das mit dem Ventilkörper (21) derart zusammenwirkt, dass eine Bewegung des Ventilkörpers (21) in die Schließstellung gedämpft wird.

15. Anschlusskupplung nach Anspruch 14, **dadurch gekennzeichnet, dass** das Dämpfungselement (26) während einer Bewegung des Ventilkörpers (21) in die Schließstellung entgegen einer Rückstellkraft ausgelenkt wird, wobei das Hauptventil (20) vorzugsweise eine mit dem Ventilkörper (21) in Verbindung stehende Ventilstange (25) aufweist, wobei das Dämpfungselement während der Bewegung des Ventilkörpers (21) in die Schließstellung zwischen der Ventilstange (25) und einem Abschnitt des Gehäuses (10) komprimiert wird.
